# FASCICULE DE BREVET EUROPEEN

(11) **EP 3 330 325 B1**
(45) Date de publication et mention de la délivrance du brevet: **24.04.2019**
(21) Numéro de dépôt: 17203964.6
(22) Date de dépôt: 28.11.2017
(51) Int. Cl.: C09D 5/14, C09D 4/06, H01B 7/18, B60R 16/02, H02G 3/04, H02G 15/18

(54) **VERNIS ANTIFONGIQUE POUR GAINE THERMORETRACTABLE DE HARNAIS BUS**
ANTIFUNGALER LACK FÜR SCHRUMPFHÜLSEN VON BUSGURTEN
ANTI-FUNGAL VARNISH FOR HEAT-SHRINKABLE SLEEVE OF BUS HARNESS

(30) Priorité: 02.12.2016 FR 1661893
(43) Date de publication de la demande: 06.06.2018
(73) Titulaire: AXON CABLE, 51210 Montmirail (FR)
(72) Inventeur: DE JESUS, Aurélie, 51210 MONTMIRAIL (FR); YU, Ning, 77174 VILLENEUVE LE COMTE (FR)
(74) Mandataire: Cabinet Beau de Loménie

(56) Documents cités:
- EP-A2- 0 297 538
- WO-A1-91/05024
- WO-A1-2004/063254
- WO-A1-2016/144169
- US-A- 5 413 790
- US-A1- 2009 123 723

## Description

La présente invention concerne un vernis antifongique destiné en particulier aux gaines thermorétractables de harnais bus selon la norme MIL-STD-1553.

Les harnais bus selon la norme MIL-STD-1553 sont utilisés dans diverses régions du monde, dans des domaines variés tels que l'aéronautique ou le militaire. Il est donc nécessaire qu'ils puissent être conformes aux différentes normes en relation avec ces marchés et ces domaines d'application telles que la résistance aux moisissures.
Les normes utilisées sont en particulier les 7 suivantes :
- GAM EG 13 (norme militaire) ;
- NF-EN-ISO 846 (norme européenne) ;
- NF-EN-60068-2-10 (norme européenne) ;
- NF-EN-2591-306 (norme européenne) ;
- ASTM G21-96 (norme américaine concernant les matériaux) ;
- MIL-STD-810G (norme militaire) et
- SAE-AMS-I-7444 (norme aérospatiale).
Les moisissures sont connues pour s'attaquer aux matériaux suivants : les vernis, les équipements électriques, les plastiques, la cellulose, le caoutchouc, les carburants et les lubrifiants et il en existe de nombreuses souches. Les différentes normes peuvent regrouper des tests différents visant différentes souches.
Les souches fongiques utilisées dans les 7 normes les plus importantes indiquées ci-dessus sont les 13 suivantes:
- *Aspergillus niger;*
- *Aspergillus terreus;*
- *Pénicillium funiculosum;*
- *Pénicillium ochro-chloron;*
- *Paecilomyces variotii;*
- *Scopulariopsis brevicaulis;*
- *Trichoderma viride;*
- *Aureobasidium pullulans;*
- *Gliocladium virens;*
- *Chaetomium globosum;*
- *Hormoconis resinae;*

### - Aspergillus versicolor et

### - Aspergillus flavus.

Il est donc important que les harnais bus selon la norme MIL-STD-1553 résistent à ces 13 souches afin qu'ils puissent convenir à la majorité des domaines d'application dans les différents pays.
Pour obtenir un tel harnais bus les inventeurs se sont aperçus qu'il était nécessaire que la gaine thermorétractable utilisée soit une gaine antifongique puisque les moisissures ont tendance à l'attaquer.
Il existe de nombreuses gaines thermorétractables sur le marché. Cependant, aucune ne porte explicitement la dénomination « anti-moisissure, antifongique ». En outre malheureusement ces gaines ne sont pas réellement adaptées car les harnais obtenus n'ont pas passé les tests de résistance aux moisissures.
Il est donc nécessaire de trouver une nouvelle gaine antifongique pouvant résister à ces différents tests.

Les inventeurs se sont aperçus de façon surprenante qu'il était possible de fabriquer de telles gaines en recouvrant les gaines thermorétractables classiques avec un vernis antifongique double couche.

Ainsi la présente invention concerne un vernis antifongique double couche comprenant :
- une couche de base à base d'une résine polyvinyle acétale, avantageusement une résine polyvinyle butyrale, en solution dans des monomères acrylates, avantageusement un mélange d'acide acrylique de tétrahydrofurfuryl acrylate et de phénoxy éthyle acrylate, et diluée dans de l'alcool ou un éther de glycol, en particulier dans l'éthanol ;
- une couche supérieure à base de polyester acrylate modifié par un polymère diène ou à base de polyuréthane, avantageusement à base de diglycidyl éther de bisphénol A modifié polybutadiène, en solution dans des monomères acrylates, avantageusement un mélange d'isobornyl acrylate et d'acide acrylique, et diluée dans un éther de glycol, avantageusement du propylène glycol méthyle éther acétate ; et
- au moins 10% en poids par rapport au poids total du vernis sec d'un agent antifongique, ledit agent étant dispersé dans les deux couches de vernis.

Dans un mode de réalisation avantageux, l'agent antifongique est inorganique, en particulier sous forme de poudre.
De façon avantageuse il s'agit d'une zéolithe échangée à l'argent.
Les zéolithes sont des cristaux formés d'un squelette microporeux d'aluminosilicates. Ce squelette microporeux est de charge négative, et il est donc équilibré avec des cations (ions argent dans notre cas) situés dans les pores.
L'argent est considéré comme un élément «oligo-dynamique», en raison de son efficacité antimicrobienne pour de très faibles concentrations (de l'ordre de 0,1 à 10 ppm).
Ainsi, la zéolithe échangée à l'argent peut être préparée en remplaçant certains ou tous les ions métalliques échangeables, en général des ions alcalins ou de métal alcalin, des particules de zéolithe par des ions argent à l'aide d'un procédé d'échange d'ions dans une solution aqueuse contenant les ions argents. Des exemples de zéolithes échangées à l'argent et leurs procédés de préparation sont décrits dans les brevets US 4 911 899 et US 4 775 585. Les zéolithes échangées à l'argent utilisables dans la présente invention peuvent être naturelles ou synthétiques. Une zéolithe est en général un aluminosilicate cristallin ayant un squelette tridimensionnel généralement de formule xM_{2/n}O.Al₂O₃.ySiO₂.zH₂O dans laquelle M représente un ion métallique échangeable (alcalin par exemple); n représente la valence du métal; x est le coefficient molaire de l'oxyde métallique en relation avec Al₂O₃; y est le coefficient molaire de la silice en relation avec Al₂O₃; et z est le nombre de molécule d'eau présente lors de la cristallisation.
La zéolithe selon l'invention inclut des zéolithes A, des zéolithes Z, des zéolithes Y et la mordénite. D'autres ions métalliques en plus de l'argent, tels que le zinc ou le cuivre, peuvent être incorporés dans la zéolithe par un procédé d'échange d'ions. Dans un exemple particulier, la zéolithe échangée à l'argent selon l'invention est une zéolithe échangée à l'argent et au zinc telle que par exemple la zéolithe échangée à l'argent et au zinc Irgaguard® B5000 commercialisée par Ciba Specialty Chemicals Corporation.
La teneur en agent antifongique du vernis selon la présente invention est d'au moins 10% en poids par rapport au poids total du vernis sec, avantageusement comprise entre 10 et 20%, encore plus avantageusement entre 10 et 15%.

Le vernis antifongique selon l'invention est donc un vernis double couche.
En effet les inventeurs se sont aperçu qu'un vernis simple couche ne permettait pas d'obtenir un effet antifongique suffisant sur la gaine selon l'invention (exemple comparatif 3).

La première couche du vernis antifongique, appelée couche de base ou primaire, est donc à base d'une résine polyvinyle acétale. Il peut s'agir par exemple d'une résine polyvinyle butyrale ou d'une résine formal polyvinylique. En particulier il s'agit de la résine polyvinyle butyrale. Une telle résine est par exemple commercialisée par Green Isolight International sous le nom commercial GII 100M.
Avantageusement, la teneur en résine polyvinyle acétale est comprise entre 10 et 20% en poids par rapport au poids total de l'extrait sec de la couche de base, plus avantageusement entre 13 et 17%.

La couche de base comprend en outre un ou plusieurs monomères acrylates dans lesquels est mise en solution la résine polyvinyle acétale.
Ces monomères sont avantageusement monofonctionnels pour amener une grande adhésion et flexibilité sur tout type de support et doivent pouvoir solubiliser la résine. Ils sont en particulier choisis parmi l'acide acrylique, le tétrahydrofurfuryl acrylate, le phénoxy éthyle acrylate et leurs mélanges.
Avantageusement, la teneur en monomère acrylate est comprise entre 60 et 80% en poids par rapport au poids total de l'extrait sec de la couche de base, avantageusement entre 65 et 75%.
Cette couche doit être diluée dans un alcool, en particulier l'éthanol, ou un éther de glycol, en particulier le propylène glycol méthyle éther acétate (Dowanol PMA). Plus particulièrement, elle est diluée dans un alcool, encore plus particulièrement dans l'éthanol.
En effet les inventeurs se sont aperçus que la présence d'alcool ou d'éther de glycol et en particulier d'alcool tel que l'éthanol permettait d'éviter les problèmes de flexibilité lorsque le vernis est appliqué sur une gaine (exemple comparatif 6).
Dans un mode de réalisation particulier, la couche de base a un extrait sec compris entre 10 et 45% en poids par rapport au poids total de la couche de base, avantageusement entre 20 et 40% en poids.

La couche de base comprend également l'agent antifongique selon la présente invention, en particulier en une teneur comprise entre 5 et 15 % en poids par rapport au poids total de l'extrait sec de la couche de base.

La couche de base peut également comprendre d'autres additifs tels que des photoinitiateurs ou des amorceurs de la réaction radicalaire comme par exemple le 1-Hydroxycyclohexyl phényle cétone et le Bis(2,4,6-trimethylbenzoyl)-phénylphosphineoxide.

La deuxième couche du vernis antifongique, appelée couche supérieure, est donc à base de polyester acrylate modifié par un polymère diène tel que le polybutadiène ou à base de polyuréthane, avantageusement à base de polyester acrylate modifié par un polymère diène tel que le polybutadiène.
De façon avantageuse le polyester acrylate modifié par un polymère diène est du diglycidyl éther de bisphénol A acrylé modifié polybutadiène. Ce produit est par exemple commercialisé par Green Isolight International sous le nom commercial GII 206A.

Avantageusement, la teneur en polyester acrylate modifié par un polymère diène ou en polyuréthane est comprise entre 50 et 70% en poids par rapport au poids total de l'extrait sec de la couche supérieure, avantageusement entre 55 et 65%.

La couche supérieure comprend en outre un ou plusieurs monomères acrylates dans lesquels est mis en solution le polyester acrylate modifié par un polymère diène ou le polyuréthane.
Ces monomères sont avantageusement choisis parmi l'acide acrylique, l'isobornyl acrylate et leurs mélanges. L'acide acrylique présente une résistance thermique et chimique très élevée car le réseau est relativement réticulé.

L'Isobornyl acrylate présente une T_{G} élevée mais par son côté monofonctionnel garantit une bonne souplesse au film obtenu.
Avantageusement, la teneur en monomère acrylate est comprise entre 15 et 30% en poids par rapport au poids total de l'extrait sec de la couche supérieure, avantageusement entre 20 et 25%.
Cette couche doit être diluée dans un éther de glycol, avantageusement le propylène glycol méthyl éther acétate.
En effet les inventeurs se sont aperçus que la présence de ce solvant permettait d'éviter les problèmes de flexibilité lorsque le vernis était appliqué sur une gaine (exemple comparatif 6).

Dans un mode de réalisation particulier, la couche supérieure a un extrait sec compris entre 10 et 45% en poids par rapport au poids total de la couche de supérieure, avantageusement entre 20 et 45% en poids.

La couche supérieure comprend également l'agent antifongique selon la présente invention, en particulier en une teneur comprise entre 5 et 15% en poids par rapport au poids total de l'extrait sec de la couche supérieure.

La couche supérieure peut également comprendre d'autres additifs tels qu'un plastifiant (par exemple un thiol acrylé tel que commercialisé par la société Productos Concentrol sous la dénomination ORDISOL PET 750 PA), ou des photoinitiateurs ou des amorceurs de la réaction radicalaire comme par exemple le 1-Hydroxycyclohexyl phényle cétone et/ou le Bis(2,4,6-trimethylbenzoyl)-phénylphosphineoxide.

Le vernis selon l'invention présente avantageusement au moins une des caractéristiques suivantes, avantageusement toute ces caractéristiques:
- Bonne adhérence sur une gaine thermorétractable ;
- Résistance 2 heures à 150°C (le vernis ne doit pas se décoller ni craquer);
- Résistance à la rétractation de la gaine ;
- Résistance à l'acétone (Le vernis ne doit pas se dissoudre après frottement de la gaine vernie à l'aide d'un chiffon imbibé d'acétone);
- Bonne dispersion de l'agent antifongique dans le vernis ;
- La gaine thermorétractable recouverte du vernis antifongique selon l'invention doit garder sa flexibilité à 180°, le vernis ne devant pas être cassant (le vernis ne doit pas se décoller ni craquer après pliage de la gaine à 180°);
- Pas de changement d'aspect de la gaine recouverte du vernis antifongique selon l'invention.
En effet, lorsque le vernis antifongique selon l'invention est appliqué sur une gaine thermorétractable, cette application se fait avant la réalisation d'un harnais de bus et le vernis antifongique selon l'invention doit donc avantageusement résister à 150°C pendant 2 heures et au changement de diamètre de la gaine.
En outre, l'acétone étant utilisé dans le processus de fabrication du harnais de bus, pour nettoyer les éventuelles traces de colle, le vernis antifongique selon l'invention est donc avantageusement résistant à l'acétone. Enfin, avantageusement le vernis ne doit pas modifier la flexibilité à 180° de la gaine thermorétractable qu'il revêt, le harnais obtenu devant garder sa souplesse.

Le vernis antifongique double couche selon l'invention peut donc être utilisé pour revêtir une gaine thermorétractable, en particulier de façon à obtenir une gaine thermorétractable antifongique.
La présente invention concerne donc l'utilisation du vernis antifongique selon l'invention pour revêtir une gaine thermorétractable.
Avantageusement dans le cadre de cette utilisation l'épaisseur de la couche de base du vernis antifongique est comprise entre 5 et 40 µm.

De façon avantageuse, l'épaisseur de la couche supérieure du vernis antifongique est comprise entre 5 et 40 µm.

La présente invention concerne de plus une gaine thermorétractable antifongique recouverte par un vernis antifongique double couche selon la présente invention.

Avantageusement, la gaine thermorétractable antifongique selon l'invention est caractérisée par le fait que l'épaisseur de la couche de base du vernis antifongique est comprise entre 5 et 40 µm, et avantageusement par le fait que l'épaisseur de la couche supérieure du vernis antifongique est comprise entre 5 et 40 µm.

De façon particulièrement avantageuse, la gaine thermorétractable antifongique selon l'invention est une gaine de harnais bus selon la norme MIL-STD-1553.

En particulier la gaine thermorétractable antifongique selon l'invention a un diamètre compris entre 4 et 13 mm, avantageusement entre 4,5 et 12,7 mm.

Plus particulièrement la gaine thermorétractable antifongique selon l'invention présente les caractéristiques suivantes :
- elle doit être flexible à 180°, c'est-à-dire que le vernis antifongique selon l'invention qui la recouvre ne doit pas être cassant (le vernis ne doit pas se décoller ni craquer après pliage de la gaine à 180°) ;
- elle ne doit pas présenter de changement d'aspect après être recouverte du vernis antifongique selon l'invention.

La présente invention concerne en outre un procédé de fabrication d'une gaine thermorétractable antifongique selon la présente invention, qui comprend l'étape de revêtement d'une gaine thermorétractable par un vernis antifongique selon la présente invention.
Avantageusement l'étape de revêtement comprend
- une étape d'application de la couche de base du vernis antifongique selon la présente invention suivie par une étape de séchage et de réticulation par les UV et
- une étape d'application de la couche supérieure du vernis antifongique selon l'invention suivie par une étape de séchage et de réticulation par les UV.

La présente invention concerne de plus un harnais bus antifongique selon la norme MIL-STD-1553 comprenant une gaine thermorétractable antifongique selon la présente invention.

De façon avantageuse, le harnais bus selon l'invention comprend en outre une colle époxy antifongique.
Avantageusement cette colle comprend le même agent antifongique que le vernis antifongique selon l'invention, de façon avantageuse en une teneur d'au moins 6% en poids par rapport au poids total de la colle.
La colle époxy antifongique utilisable dans le cadre de la présente invention peut être une colle époxy bi-composant, telle que la colle époxy V9500® de Hellermann, dans laquelle l'agent antifongique a été dispersé.
Avantageusement le harnais bus antifongique selon l'invention est conforme aux 7 normes suivantes :
- GAM EG 13 (norme militaire) ;
- NF-EN-ISO 846 (norme européenne) ;
- NF-EN-60068-2-10 (norme européenne) ;
- NF-EN-2591-306 (norme européenne) ;
- ASTM G21-96 (norme américaine concernant les matériaux) ;
- MIL-STD-810G (norme militaire) et
- SAE-AMS-I-7444 (norme aérospatiale).
De façon avantageuse le harnais bus antifongique selon la présente invention résiste donc aux 13 souches fongiques suivantes:
- *Aspergillus niger;*
- *Aspergillus terreus;*
- *Pénicillium funiculosum;*
- *Pénicillium ochro-chloron;*
- *Paecilomyces variotii;*
- *Scopulariopsis brevicaulis;*
- *Trichoderma viride;*
- *Aureobasidium pullulans;*
- *Gliocladium virens;*
- *Chaetomium globosum;*
- *Hormoconis resinae;*
- *Aspergillus versicolor* et
- *Aspergillus flavus.*

La présente invention concerne enfin l'utilisation du harnais bus antifongique selon la norme MIL-STD-1553 selon la présente invention dans le domaine de l'aéronautique ou du spatial.

La présente invention sera mieux comprise à la lecture de la description des exemples de réalisation qui sont donnés à titre indicatif non limitatif.

### Exemple 1

Un vernis double couche dont la composition est indiquée dans le tableau 1 est appliqué sur une gaine thermorétractable Hellermann de référence PST-H grâce à une ligne d'enduction ayant une vitesse de 2m/min. Cette ligne permet de vernir des bobines de gaines complètes. Elle permet également de déposer les 2 couches de vernis successives en un seul passage. Chaque couche de vernis est séchée à une température de 50°C puis réticulée à l'aide de lampes UV pendant 10s.

**Tableau 1 : composition des deux couches du vernis en g**

| **FORMULE DE LA COUCHE DE BASE EN EXTRAIT SEC : ES1** | | |
|---|---|---|
| Polyvinyle butyral | 8,5 | 15,3 |
| Acide acrylique | 13,2 | 23,7 |
| Tetrahydrofurfuryle acrylate | 13,2 | 23,7 |
| Phenoxyethyl acrylate | 13,2 | 23,7 |
| 1-Hydroxycyclohexyl phényle cétone | 1 | 1,8 |
| Bis(2,4,6-trimethylbenzoyl)-phénylphosphineoxide. | 1 | 1,8 |
| Agent antifongique : Irgaguard® B5000 | 5,5 | 9,9 |
| | 55,6 | 100 |

| **FORMULE EN SOLUTION** | | |
|---|---|---|
| ES1 | 55,6 | 23,8 |
| Ethanol | 178 | 76,2 |
| | 233,6 | 100 |

| **FORMULE DE LA COUCHE SUPERIEURE EN EXTRAIT SEC : ES2** | | |
|---|---|---|
| DGEBA (Bisphénol A diglycidyl éther) acrylé modifié polybutadiène | 50 | 62,5 |
| Acide acrylique | 5 | 6,25 |
| Isobornyl acrylate | 14 | 17,5 |
| Thiol acrylé | 1 | 1,25 |
| 1-Hydroxycyclohexyl phényle cétone | 1 | 1,25 |
| Bis(2,4,6-trimethylbenzoyl)-phénylphosphineoxide. | 1 | 1,25 |
| Agent antifongique : Irgaguard® B5000 | 8 | 10 |
| | 80 | 100 |

| **FORMULE EN SOLUTION** | | |
|---|---|---|
| ES2 | 80 | 40,6 |
| Propylène glycol méthyl éther acétate | 117 | 59,4 |
| | 197 | 100 |

La gaine thermorétractable vernie obtenue de diamètre 4,8 mm ou 12,7 mm est ensuite utilisée pour fabriquer un harnais bus AMB/A-C2-10-01, harnais dédié au domaine aéronautique en utilisant également une colle époxy antifongique obtenue à partir de la colle époxy bi-composant V9500 de chez Hellermann dans laquelle 6% en poids d'agent antifongique Irgaguard B5000 a été ajoutée.

Les harnais sont ensuite testés selon 7 normes différentes, afin de vérifier les performances de l'agent antifongique sur un nombre de souches fongiques assez important. Les normes utilisées sont les suivantes :
- GAM EG 13 (norme militaire)
- NF-EN-ISO 846 (norme européenne)
- NF-EN-60068-2-10 (norme européenne)
- NF-EN-2591-306 (norme européenne)
- ASTM G21-96 (norme américaine concernant les matériaux)
- MIL-STD-810G (norme militaire)
- SAE-AMS-I-7444 (norme aérospatiale)

Le test consiste à inoculer un mélange de spores de champignons spécifiées sur les harnais, et laisser incuber pendant un temps déterminé, dans des conditions de température et d'humidité, particulièrement favorables pour la croissance des champignons.

Ensuite, l'évaluation de l'attaque fongique est effectuée par inspection visuelle.

Les résultats de ces essais sont rassemblés dans le tableau 2 et sont exprimés en degrés de croissance des champignons. Le degré 0 correspond à l'absence de croissance du champignon et le degré 4 à la croissance sur la moitié de la surface du matériau testé.

Les souches fongiques utilisées dans ces tests sont les suivantes:
- *Aspergillus niger*
- *Aspergillus terreus*
- *Pénicillium funiculosum*
- *Pénicillium ochro-chloron*
- *Paecilomyces variotii*
- *Scopulariopsis brevicaulis*
- *Trichoderma viride*
- *Aureobasidium pullulans*
- *Gliocladium virens*
- *Chaetomium globosum*
- *Hormoconis resinae*
- *Aspergillus versicolor*
- *Aspergillus flavus*

**Tableau 2 : résultats des tests**

| **Normes** | **Gaine 4,8 mm** | **Gaine 12,7 mm** |
|---|---|---|
| ASTM G21 | 0 | 1 |
| ISO 846 | 1 | 1 |
| MIL-STD-810G | 0-1 | 1 |
| EN 60068 | 1 | 1 |
| GAM EG 13 | 1 | 1 |
| SAE-AMS-7444 | 0 | 0 |
| EN 2591-306 | 1 | 1 |

Le vernis selon l'invention contenant 10% d'agent antifongique permet donc d'obtenir une gaine thermorétractable antifongique et les harnais les utilisant respectent les 7 normes au niveau des essais antifongiques sur les 13 souches testées.

Les gaines qui ont servies à la fabrication du harnais ont été testées pour vérifier leur résistance à l'acétone, leur tenue en température et leur flexibilité.

Le protocole de ces tests est le suivant :
Tenue en température : 2h à 150 °C. Le vernis ne doit pas se décoller ni craquer.
Résistance à l'acétone : la gaine vernie est frotté à l'aide d'un chiffon imbibé d'acétone. Le vernis ne doit pas se dissoudre.
Flexibilité : la gaine est pliée à 180°. Le vernis ne doit pas se décoller ni craquer.

Les résultats sont rassemblés dans le tableau 3 ci-dessous :

**Tableau 3 : résultat des tests**

| **Gaine** | **Tenue à la température** | **Flexibilité** | **Tenue à l'acétone** |
|---|---|---|---|
| **4,8 mm** | oui | oui | oui |
| **12,7 mm** | oui | oui | oui |

Les gaines vernies selon l'invention qui servent à la fabrication des harnais présentent donc une bonne tenue en température et à l'acétone et gardent leur flexibilité.

### Exemple comparatif 1

Le même type de harnais obtenu comme dans l'exemple 1 mais avec une gaine thermorétractable recouverte d'un vernis de composition identique à celui de l'exemple 1 mais ne contenant que 6% en poids d'agent antifongique et ayant de l'acétone comme solvant à la place du propylène glycol méthyl éther acétate dans la couche supérieure a été testé selon les 7 normes différentes, afin de vérifier les performances de l'agent antifongique sur les 13 souches fongiques assez importantes.

Les résultats sont rassemblés dans le tableau 4 ci-dessous.

**Tableau 4 : résultats des tests**

| **Normes** | **Degrés mini et maxi** | **Gaine 4,8 mm** | **Gaine 12,7 mm** |
|---|---|---|---|
| ASTM G21 | Mini | 0-1 | 1-2 |
| | Maxi | 1 | 1-2 |
| ISO 846 | Mini | 0 | 1-2 |
| | Maxi | 1-2 | 2 |
| MIL-STD-810G | Mini | 0-1 | 2 |
| | Maxi | 1 | 2 |
| EN 60068 | Mini | 1-2a | 2b |
| | Maxi | 1-2a | 2b |
| GAM EG 13 | Mini | 1 | 1-2 |
| | Maxi | 1-2 | 2-3 |
| SAE-AMS-7444 | Mini | 0-1 | 1 |
| | Maxi | 1 | 2 |
| EN 2591-306 | Mini | 1 | 1-2 |
| | Maxi | 1-2 | 2-3 |

Ces résultats représentent les degrés mini et maxi obtenus en fonction de la norme utilisée.

On observe des différences entre les gaines de diamètres 4,8 mm et 12,7 mm.

Plus le diamètre est gros et plus les moisissures ont de surface pour se développer.

La teneur en agent antifongique dans le vernis n'est donc pas suffisante pour les gaines de fort diamètre.

### Exemples comparatifs 2 et 3

Des gaines thermorétractables de diamètre de 4,8 mm recouvertes d'un vernis tel que décrit dans l'exemple 1 mais ne contenant que 4% en poids d'agent antifongique et ayant de l'acétone comme solvant à la place du propylène glycol méthyl éther acétate dans la couche supérieur, sont obtenues comme dans l'exemple 1 (exemple comparatif 2). Elles ont été testées selon les 7 normes différentes, afin de vérifier les performances de l'agent antifongique sur les 13 souches fongiques assez importantes.

Ces résultats ont été comparés avec ceux obtenus avec des gaines thermorétractables recouvertes d'un vernis constitué uniquement par la couche supérieure diluée dans l'acétone au lieu du propylène glycol méthyl éther acétate et contenant également 4% en poids d'agent antifongique (exemple comparatif 3).

Les résultats sont rassemblés dans le tableau 5 ci-dessous.

**Tableau 5 : résultats des tests**

| **Exemple comparatif** | **Normes** | **Essai** | **Gaine 4,8 mm** |
|---|---|---|---|
| N° 2 | GAM EG 13 | 1 | 0 |
| | | 2 | 1 |
| N°3 | | 1 | 3 |
| | | 2 | 3 |
| N° 2 | ISO 846 | 1 | 1 |
| | | 2 | 2 |
| N°3 | | 1 | 1-2 |
| | | 2 | 2 |
| N° 2 | ASTM G21 | 1 | 1 |
| | | 2 | 1-2 |
| N°3 | | 1 | 2-3 |
| | | 2 | 2-3 |
| N° 2 | EN 60068 | 1 | 2a |
| | | 2 | 2b |
| N°3 | | 1 | 2b-3 |
| | | 2 | 2b-3 |
| N° 2 | EN 2591-306 | 1 | 0 |
| | | 2 | 1 |
| N°3 | | 1 | 3 |
| | | 2 | 3 |
| N° 2 | MIL-STD-810G | 1 | 0-1 |
| | | 2 | 0-1 |
| N°3 | | 1 | 1 |
| | | 2 | 1-2 |
| N° 2 | SAE-AMS-7444 | 1 | 0 |
| | | 2 | 1 |
| N°3 | | 1 | 1 |
| | | 2 | 1 |

L'exemple comparatif 3 a de moins bon résultat que l'exemple comparatif 2 même si la teneur en agent antifongique est la même, ce qui prouve que la présence de 2 couches dans le vernis permet d'améliorer sa propriété antifongique. L'exemple comparatif 2 présente d'assez bon résultat même avec des teneurs faibles en agent antifongique puisque le degré le plus élevé obtenu est le degré 2b selon la norme NF EN60068-2-10 (croissance ≤ 25% de la surface totale).

### Exemples comparatifs 4, 5 et 6

Des gaines thermorétractables de diamètre de 4,8 mm recouvertes d'un vernis tel que décrit dans l'exemple 1 mais contenant uniquement 2% en poids d'agent antifongique et ayant de l'acétone comme solvant à la place du propylène glycol méthyl éther acétate dans la couche supérieure (exemple comparatif 4) ont été obtenues comme dans l'exemple comparatif 2 mais à l'aide de filières de diamètre 6,1 mm. Elles ont été testées pour vérifier leur résistance à l'acétone, leur tenue en température et leur flexibilité en utilisant le protocole de l'exemple 1.

Les résultats obtenus ont été comparés avec ceux obtenus par une gaine thermorétractable identique à l'exemple comparatif 4 à l'exception du fait que le vernis contient 6% en poids d'agent antifongique (exemple comparatif 5) et ayant de l'acétone comme solvant à la place du propylène glycol méthyl éther acétate dans la couche supérieure et avec ceux obtenus par une gaine thermorétractable identique à l'exemple comparatif 4 à l'exception du fait que les couches du vernis ne sont diluées dans aucun solvant et que le vernis contient également 2% en poids d'agent antifongique (exemple comparatif 6).

Les résultats sont rassemblés dans le tableau 6 ci-dessous.

**Tableau 6 : résultat des tests**

| **Exemple comparatif** | **Tenue à la température** | **Flexibilité** | **Tenue à l'acétone** |
|---|---|---|---|
| N°4 | oui | oui | oui |
| N°5 | oui | oui | oui |
| N°6 | oui | non | oui |

D'après le tableau ci-dessus, on constate que la gaine vernie garde sa flexibilité lorsque les 2 couches sont diluées à 30% en poids dans un solvant. La quantité d'agent antifongique n'entraîne pas de différence de résultats, car la poudre se disperse bien dans les solvants.

## Revendications

1. Vernis antifongique double couche comprenant :
- une couche de base à base d'une résine polyvinyle acétale, avantageusement une résine polyvinyle butyrale, en solution dans des monomères acrylates, avantageusement un mélange d'acide acrylique de tétrahydrofurfuryl acrylate et de phénoxy éthyle acrylate, et diluée dans de alcool ou un éther de glycol, en particulier dans l'éthanol ;
- une couche supérieure à base de polyester acrylate modifié par un polymère diène ou à base de polyuréthane, avantageusement à base de diglycidyl éther de bisphénol A acrylé modifié polybutadiène, en solution dans des monomères acrylates, avantageusement un mélange d'isobornyl acrylate et d'acide acrylique, et diluée dans un éther de glycol, avantageusement le propylène glycol méthyle éther acétate ;
- au moins 10% en poids par rapport au poids total du vernis sec d'un agent antifongique, ledit agent étant dispersé dans les deux couches de vernis.

2. Vernis antifongique selon la revendication 1, **caractérisé en ce que** l'agent antifongique est une zéolithe échangée à l'argent.

3. Vernis antifongique selon l'une quelconque des revendications 1 ou 2, **caractérisé en ce que** la couche de base a un extrait sec compris entre 10 et 45% en poids par rapport au poids total de la couche de base, avantageusement entre 20 et 40% en poids.

4. Vernis antifongique selon l'une quelconque des revendications 1 à 3, **caractérisé en ce que** la couche supérieure a un extrait sec compris entre 10 et 45% en poids par rapport au poids total de la couche de supérieure, avantageusement entre 20 et 45% en poids.

5. Vernis antifongique selon l'une quelconque des revendications 1 à 4, **caractérisé en ce que** la couche de base comprend entre 5 et 15% d'agent antifongique en poids par rapport au poids total de l'extrait sec de la couche de base et **en ce que** la couche supérieure comprend entre 5 et 15% d'agent antifongique en poids par rapport au poids total de l'extrait sec de la couche de supérieure.

6. Utilisation du vernis antifongique selon l'une quelconque des revendications 1 à 5 pour revêtir une gaine thermorétractable.

7. Gaine thermorétractable antifongique recouverte par un vernis antifongique selon l'une quelconque des revendications 1 à 5.

8. Gaine thermorétractable antifongique selon la revendication 7, **caractérisée en ce que** l'épaisseur de la couche de base du vernis antifongique est comprise entre 5 et 40 µm
et l'épaisseur de la couche supérieure du vernis antifongique est comprise entre 5 et 40 µm.

9. Gaine thermorétractable antifongique selon l'une quelconque des revendications 7 ou 8, **caractérisée en ce qu'**il s'agit d'une gaine de harnais bus selon la norme MIL-STD-1553.

10. Gaine thermorétractable antifongique selon l'une quelconque des revendications, 7 à 9 **caractérisée en ce qu'**elle a un diamètre compris entre 4 et 13 mm.

11. Procédé de fabrication d'une gaine thermorétractable antifongique selon l'une quelconque des revendications 7 à 10, **caractérisé en ce qu'**il comprend l'étape de revêtement d'une gaine thermorétractable par un vernis antifongique selon l'une quelconque des revendications 1 à 5.

12. Procédé selon la revendication 11 **caractérisé en ce que** l'étape de revêtement comprend :
- une étape d'application de la couche de base du vernis antifongique selon l'une des revendications 1 à 5 suivi par une étape de séchage et de réticulation par les UV
- une étape d'application de la couche supérieure du vernis antifongique selon l'une des revendications 1 à 5 suivi par une étape de séchage et de réticulation par les UV.

13. Harnais bus antifongique selon la norme MIL-STD-1553 comprenant une gaine thermorétractable antifongique selon l'une des revendications 7 à 10.

14. Harnais bus selon la revendication 13 comprenant en outre une colle époxy antifongique, ladite colle antifongique comprenant avantageusement une colle époxy bi-composant et au moins 6% en poids par rapport au poids total de la colle d'un agent antifongique dispersé dans la colle époxy.

15. Utilisation du harnais bus antifongique selon la norme MIL-STD-1553 selon l'une quelconque des revendications 13 ou 14 dans le domaine de l'aéronautique ou du spatial.

## Patentansprüche

1. Antifungaler Zweischicht-Lack, umfassend:
- eine Grundschicht auf der Basis eines Polyvinylacetalharzes, vorteilhafterweise eines Polyvinylbutyralharzes, in Lösung in Acrylatmonomeren, vorteilhafterweise einem Acrylsäuregemisch von Tetrahydrofurfurylacrylat und Phenoxyethylacrylat, und in Alkohol oder einem Glykolether, insbesondere in Ethanol verdünnt,
- eine Deckschicht auf der Basis von durch ein Dienpolymer modifiziertes Polyesteracrylat oder auf der Basis von Polyurethan, vorteilhafterweise auf der Basis von mit acryliertem Bisphenol-A-Diglycidylether modifiziertem Polybutadien, in Lösung in Acrylatmonomeren, vorteilhafterweise einem Gemisch von Isobornylacrylat und Acrylsäure, und in einem Glykolether, vorteilhafterweise Propylenglykolmethyletheracrylat verdünnt,
- mindestens 10 Gew.-% eines antifungalen Mittels, bezogen auf das Gesamtgewicht des trockenen Lacks, wobei das Mittel in den zwei Lackschichten dispergiert ist.

2. Antifungaler Lack nach Anspruch 1, **dadurch gekennzeichnet, dass** das antifungale Mittel ein silberausgetauschter Zeolith ist.

3. Antifungaler Lack nach einem der Ansprüche 1 oder 2, **dadurch gekennzeichnet, dass** die Grundschicht eine Trockenmasse aufweist, die zwischen 10 und 45 Gew.-%, vorteilhafterweise zwischen 20 und 40 Gew.-%, bezogen auf das Gesamtgewicht der Grundschicht, liegt.

4. Antifungaler Lack nach einem der Ansprüche 1 bis 3, **dadurch gekennzeichnet, dass** die Deckschicht eine Trockenmasse aufweist, die zwischen 10 und 45 Gew.-%, vorteilhafterweise zwischen 20 und 45 Gew.-%, bezogen auf das Gesamtgewicht der Deckschicht, liegt.

5. Antifungaler Lack nach einem der Ansprüche 1 bis 4, **dadurch gekennzeichnet, dass** die Grundschicht zwischen 5 und 15 % antifungales Mittel, bezogen auf das Gesamtgewicht der Trockenmasse der Grundschicht, umfasst und dass die Deckschicht zwischen 5 und 15 % antifungales Mittel, bezogen auf das Gesamtgewicht der Trockenmasse der Deckschicht, umfasst.

6. Verwendung des antifungalen Lacks nach einem der Ansprüche 1 bis 5 zum Beschichten eines Schrumpfschlauchs.

7. Antifungaler Schrumpfschlauch, der mit einem antifungalen Lack nach einem der Ansprüche 1 bis 5 überzogen ist.

8. Antifungaler Schrumpfschlauch nach Anspruch 7, **dadurch gekennzeichnet, dass** die Dicke der Grundschicht des antifungalen Lacks zwischen 5 und 40 µm liegt und die Dicke der Deckschicht des antifungalen Lacks zwischen 5 und 40 µm liegt.

9. Antifungaler Schrumpfschlauch nach einem der Ansprüche 7 oder 8, **dadurch gekennzeichnet, dass** es sich um einen Busstrangschlauch gemäß der Norm MIL-STD-1553 handelt.

10. Antifungaler Schrumpfschlauch nach einem der Ansprüche 7 bis 9, **dadurch gekennzeichnet, dass** er einen Durchmesser aufweist, der zwischen 4 und 13 mm liegt.

11. Verfahren zur Herstellung eines antifungalen Schrumpfschlauchs nach einem der Ansprüche 7 bis 10, **dadurch gekennzeichnet, dass** es den Schritt des Beschichtens eines Schrumpfschlauchs mit einem antifungalen Lack nach einem der Ansprüche 1 bis 5 umfasst.

12. Verfahren nach Anspruch 11, **dadurch gekennzeichnet, dass** der Beschichtungsschritt umfasst:
- einen Schritt des Auftragens der Grundschicht des antifungalen Lacks nach einem der Ansprüche 1 bis 5 gefolgt von einem Schritt des Trocknens und des Vernetzens durch UV-Strahlen,
- einen Schritt des Auftragens der Deckschicht des antifungalen Lacks nach einem der Ansprüche 1 bis 5 gefolgt von einem Schritt des Trocknens und des Vernetzens durch UV-Strahlen.

13. Antifungaler Busstrang gemäß der Norm MIL-STD-1553, der einen antifungalen Schrumpfschlauch nach einem der Ansprüche 7 bis 10 umfasst.

14. Busstrang nach Anspruch 13, der außerdem einen antifungalen Epoxidklebstoff umfasst, wobei der antifungale Klebstoff vorteilhafterweise einen Zweikomponenten-Epoxidklebstoff und mindestens 6 Gew.-% eines in dem Epoxidklebstoff dispergierten antifungalen Mittels, bezogen auf das Gesamtgewicht des Klebstoffs, umfasst.

15. Verwendung eines antifungalen Busstrangs gemäß der Norm MIL-STD-1553 nach einem der Ansprüche 13 oder 14 im Bereich der Luftfahrt oder der Raumfahrt.

## Claims

1. Double-layer anti-fungal varnish comprising:
- a base layer based on a polyvinyl acetal resin, advantageously a polyvinyl butyral resin, in solution in acrylate monomers, advantageously a mixture of tetrahydrofurfuryl acrylate, acrylic acid and phenoxy ethyl acrylate, and diluted in alcohol or a glycol ether, in particular in ethanol;
- a top layer based on polyester acrylate modified by a diene polymer or a polymer based on polyurethane, advantageously based on polybutadiene-modified acrylated diglycidyl ether of bisphenol A, in solution in acrylate monomers, advantageously a mixture of isobornyl acrylate and acrylic acid, and diluted in a glycol ether, advantageously propylene glycol methyl ether acetate;
- at least 10% by weight based on the total weight of the dry varnish of an anti-fungal agent, said agent being dispersed in both varnish layers.

2. Anti-fungal varnish according to claim 1, **characterized in that** the anti-fungal agent is a silver-exchanged zeolite.

3. Anti-fungal varnish according to any one of claims 1 or 2, **characterized in that** the base layer has a dry extract comprised between 10 and 45% by weight based on the total weight of the base layer, advantageously between 20 and 40% by weight.

4. Anti-fungal varnish according to any one of claims 1 to 3, **characterized in that** the top layer has a dry extract comprised between 10 and 45% by weight based on the total weight of the top layer, advantageously between 20 and 45% by weight.

5. Anti-fungal varnish according to any one of claims 1 to 4, **characterized in that** the base layer comprises between 5 and 15% of anti-fungal agent by weight based on the total weight of the dry extract of the base layer and **in that** the top layer comprises between 5 and 15% of anti-fungal agent by weight based on the total weight of the dry extract of the top layer.

6. Use of the anti-fungal varnish according to any one of claims 1 to 5 to coat heat-shrink tubing.

7. Anti-fungal heat-shrink tubing coated with an anti-fungal varnish according to any one of claims 1 to 5.

8. Anti-fungal heat-shrink tubing according to claim 7, **characterized in that** the thickness of the base layer of the anti-fungal varnish is comprised between 5 and 40 µm and the thickness of the top layer of the anti-fungal varnish is comprised between 5 and 40 µm.

9. Anti-fungal heat-shrink tubing according to any one of claims 7 or 8, **characterized in that** it is bus harness tubing according to standard MIL-STD-1553.

10. Anti-fungal heat-shrink tubing according to any one of claims 7 to 9, **characterized in that** it has a diameter comprised between 4 and 13 mm.

11. A process for producing an anti-fungal heat-shrink tubing according to any one of claims 7 to 10, **characterized in that** it comprises a step of coating a heat-shrink tubing with an anti-fungal varnish according to any one of claims 1 to 5.

12. The process according to claim 11 **characterized in that** the coating step comprises:
- a step of applying the base layer of the anti-fungal varnish according to one of claims 1 to 5 followed by a step of UV curing and crosslinking;
- a step of applying the top layer of the anti-fungal varnish according to one of claims 1 to 5 followed by a step of UV curing and crosslinking.

13. An anti-fungal bus harness according to standard MIL-STD-1553 comprising an anti-fungal heat-shrink tubing according to one of claims 7 to 10.

14. The bus harness according to claim 13 further comprising an anti-fungal epoxy adhesive, said anti-fungal adhesive advantageously comprising a two-component epoxy adhesive and at least 6% by weight based on the total weight of the adhesive of an anti-fungal agent dispersed in the epoxy adhesive.

15. Use of the anti-fungal bus harness according to standard MIL-STD-1553 according to any one of claims 13 or 14 in the aeronautical or space field.
